# FASCICULE DE BREVET EUROPEEN

(11) **EP 1 949 995 B1**
(45) Date de publication et mention de la délivrance du brevet: **02.03.2011**
(21) Numéro de dépôt: 08150738.6
(22) Date de dépôt: 28.01.2008
(51) Int. Cl.: B23H 7/08

(54) **Fil electrode pour electroerosion**
Elektrodendraht für Elektroerosion
Electrode wire for electric discharge machining

(30) Priorité: 29.01.2007 FR 0752951
(43) Date de publication de la demande: 30.07.2008
(73) Titulaire: THERMOCOMPACT, 74370 Metz Tessy (FR)
(72) Inventeur: Ly, Michel, 74000 Annecy (FR); Sanchez, Gérald, 74000 Annecy (FR)
(74) Mandataire: Poncet, Jean-François

(56) Documents cités:
- EP-B- 1 009 574
- US-A1- 2006 219 666

## Description

La présente invention concerne les fils électrodes utilisés pour l'usinage par électroérosion. De tels fils sont décrits dans le document EP 1009574 qui décrit l'état de la technique le plus proche.

Le procédé bien connu d'usinage par électroérosion permet d'enlever de la matière sur une pièce conductrice de l'électricité, en générant des étincelles dans une zone d'usinage entre la pièce à usiner et un fil électrode conducteur de l'électricité. Le fil électrode défile en continu au voisinage de la pièce dans le sens de la longueur du fil, et il est déplacé progressivement dans le sens transversal par rapport à la pièce soit par translation du fil soit par translation de la pièce.

Un générateur électrique, connecté au fil électrode par des contacts électriques de part et d'autre de la zone d'usinage, établit une différence de potentiel appropriée entre le fil électrode et la pièce conductrice à usiner. La zone d'usinage entre le fil électrode et la pièce est plongée dans un fluide diélectrique approprié. La différence de potentiel provoque entre le fil électrode et la pièce à usiner l'apparition d'étincelles qui érodent progressivement la pièce et le fil électrode. Le défilement longitudinal du fil électrode permet de conserver en permanence un diamètre de fil suffisant pour éviter sa rupture dans la zone d'usinage. Le déplacement relatif du fil et de la pièce dans le sens transversal permet de découper la pièce ou de traiter sa surface, le cas échéant.

Les particules détachées du fil électrode et de la pièce par les étincelles se dispersent dans le fluide diélectrique où elles sont évacuées.

Il existe actuellement de nombreux types de fil électrode pour électroérosion, qui présentent chacun des propriétés particulières pouvant justifier leur choix pour tel ou tel type d'usinage par électroérosion.

La structure du fil électrode doit en général présenter une résistance mécanique suffisante pour éviter la rupture du fil dans la zone d'étincelage. Une résistance mécanique élevée est favorable pour permettre d'appliquer au fil électrode une tension longitudinale élevée dans la zone d'usinage, afin de garantir un positionnement très précis du fil et donc un usinage précis.

L'obtention d'une précision d'usinage, notamment la réalisation de découpes d'angle à faible rayon, nécessite d'utiliser des fils de petit diamètre et supportant une grande charge mécanique à la rupture pour être tendus dans la zone d'usinage et limiter l'amplitude des vibrations.

La plupart des machines d'électroérosion modernes sont conçues pour utiliser des fils de laiton nu, généralement de 0,25 mm de diamètre, et de charge à rupture comprise entre 400 et 1 000 N/mm².

Si possible, la structure du fil est choisie pour que le fil électrode ait un comportement favorable à l'érosion, c'est-à-dire pour que le fil permette de réaliser une érosion rapide. La vitesse d'érosion maximale d'un fil est la limite de vitesse au-delà de laquelle le fil casse lorsqu'on augmente l'énergie d'étincelage pour accélérer l'érosion.

Un autre paramètre important de l'usinage par électroérosion est la qualité de l'état de surface que l'on peut obtenir sur la zone usinée de la pièce. Les étincelles produites entre le fil électrode et la pièce réalisent dans la pièce à usiner des microcratères, c'est-à-dire des enlèvements de matière ponctuels. On comprend que l'état de surface obtenu dépend des paramètres des étincelles, qui eux-mêmes dépendent notamment de la structure du fil électrode.

Il est difficile de trouver une structure de fil électrode permettant d'optimiser simultanément les trois paramètres de vitesse d'usinage, de précision d'usinage et d'état de surface.

Par exemple, on a proposé des fils de laiton contenant de 35 à 37 % de zinc, à structure homogène, qui constituent un compromis économiquement acceptable, mais obtenus au prix d'une vitesse d'érosion relativement faible.

On a d'autre part proposé des fils revêtus, c'est-à-dire constitués d'une âme métallique revêtue d'une couche superficielle généralement homogène en métal ou alliage. Lors de l'usinage par étincelage érosif, l'arc électrique formé entre la surface du fil électrode et la surface de la pièce, au travers du diélectrique tel que l'eau, n'atteint pas le centre du fil. L'usure du fil se fait par son revêtement.

L'intérêt des fils revêtus est que l'on peut choisir l'âme du fil en fonction de ses propriétés électriques et mécaniques, et choisir le revêtement en fonction de ses propriétés érosives et de sa résistance de contact.

Ainsi, dans le document FR 2 418 699, on a proposé de revêtir l'âme par un alliage de zinc, de cadmium, d'étain, de plomb, de bismuth ou d'antimoine. Le document enseigne que la vitesse d'usinage est améliorée par le revêtement.

On a déjà constaté qu'un revêtement contenant une forte proportion d'un métal à faible chaleur massique de sublimation permet d'obtenir une plus grande vitesse de coupe, l'enrobage assurant une meilleure protection de l'âme lors de l'étincelage.

C'est ainsi que l'on a utilisé le zinc pur comme métal à faible chaleur massique de sublimation. Mais la couche de zinc pur s'use très rapidement, et ne protège pas l'âme du fil pendant une durée suffisante pour la découpe de pièces hautes.

Dans ce même esprit, on a utilisé un enrobage en alliage contenant une grande quantité de zinc, par exemple un alliage en phase β à 47 % de zinc, ou même un alliage en phase γ de cuivre et de zinc à teneur en zinc supérieure à 50 % en poids. Une difficulté est alors que l'alliage de cuivre et de zinc en phase γ est relativement dur et cassant, de sorte que l'enrobage risque de se morceler lors d'une opération de tréfilage qui met le fil à dimension pendant sa fabrication.

Le document EP 1 009 574 a mis en évidence le fait que le morcellement du revêtement en alliage de cuivre et de zinc en phase γ n'est pas défavorable, et permet de faire un fil électrode ayant de bonnes vitesses d'électroérosion. Le document enseigne pour cela un procédé de fabrication du fil dans lequel, après réalisation d'un revêtement de zinc et diffusion du zinc du revêtement et du cuivre de l'âme par échauffement pendant 1 à 4 heures, on met le fil à dimension par tréfilage pour réduire son diamètre dans un rapport entre diamètre final Df et diamètre initial Di inférieur à 0,4. Lors du tréfilage, le revêtement est morcelé en blocs qui, du fait de l'allongement du fil par tréfilage, se trouvent redistribués à la surface du fil. Le document enseigne que la redistribution est avantageuse car elle permet de répartir en une seule couche de surface de fil les blocs résultant du morcellement du revêtement, et d'assurer ainsi un taux de couverture de l'âme supérieur à 50 %, pouvant être d'environ 58 %.

Un tel fil présente toutefois de médiocres propriétés lorsqu'il est utilisé dans des procédures de finition. On constate notamment la présence d'ondulations assez marquées à la surface des pièces usinées, dans le sens perpendiculaire au défilement du fil dans la machine d'électroérosion.

Lorsqu'on veut obtenir d'excellents états de surface des pièces usinées par électroérosion, on réalise généralement une étape d'ébauche au cours de laquelle le fil d'électroérosion reçoit une grande énergie d'étincelage et taille à grande vitesse la pièce, puis on réalise cinq à dix étapes de finition au cours desquelles les énergies d'étincelage sont plus faibles.

Les dernières finitions se font avec des énergies d'étincelage très faibles. On comprend que plus l'énergie d'étincelage est faible, plus les cratères d'érosion sont de faibles tailles, et plus l'état de surface obtenu sur la pièce usinée est fin, et a une faible rugosité. La rugosité est généralement caractérisée par le paramètre Ra, défini par la norme ISO 4287:1997 par exemple.

Dans le cas d'une ondulation, ce défaut est caractérisé par un paramètre d'ondulation Wt, également défini par la norme ISO 4287:1997 par exemple.

Les ondulations que l'on peut constater avec les fils selon le document EP 1 009 574 sont illustrées sur les figures 1 et 2.

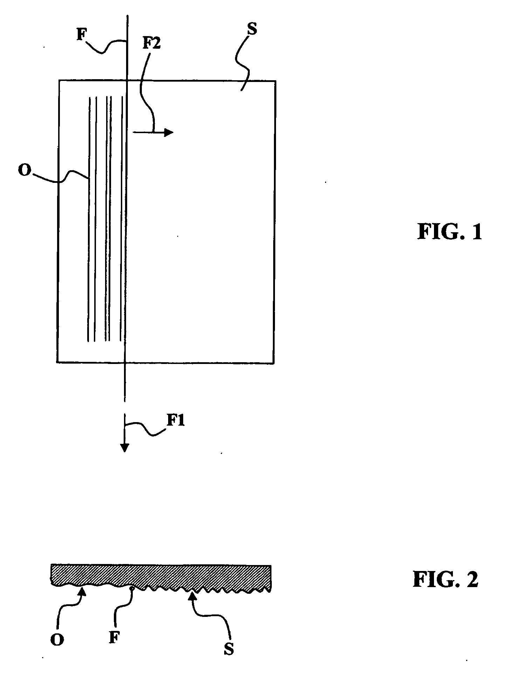

Sur la figure 1, on a représenté la surface S de la pièce à usiner, vue de face, avec le fil d'électroérosion F qui se déplace axialement le long de la surface S dans le sens de défilement F1 par rapport à la machine d'électroérosion, et qui se déplace transversalement le long de la surface S dans le sens F2 d'avance du fil pour balayer la surface S de la pièce.

Sur la figure 1, les ondulations O sont visibles à l'oeil nu sous forme de stries parallèles au fil F. Sur la figure 2, on voit que la zone O est ondulée après le passage du fil F sur la surface S de la pièce.

Il est souhaitable que les ondulations O soient inférieures au seuil de visibilité à l'oeil nu, afin que l'aspect de la surface usinée de pièce paraisse parfait.

Il y a donc un besoin pour concevoir une nouvelle structure de fil d'électroérosion à couche superficielle de laiton en phase γ morcelée qui, tout en conservant une grande vitesse d'usinage lors des étapes de coupe, présente de meilleures propriétés d'électroérosion lors des étapes de finition, permettant de réaliser des surfaces usinées plus lisses caractérisées notamment par un paramètre d'ondulation Wt inférieur à 0,4.

La présente invention résulte de l'observation selon laquelle il y a un lien de cause à effet entre la redistribution des blocs de revêtement en alliage de laiton en phase γ, dans un fil selon le document EP 1 009 574, et la présence d'ondulations en surface usinée de la pièce en fin d'étape de finition. Cela peut s'expliquer par les considérations ci-dessous.

Lors d'un procédé selon le document EP 1 009 574 où se produit une redistribution des blocs, les blocs d'alliage en phase γ, pendant une étape de tréfilage, se fracturent non seulement latéralement, c'est-à-dire dans le sens de la longueur du fil et dans le sens de sa périphérie, mais également se fracturent en deux ou plusieurs couches dans le sens de l'épaisseur du fil, et se répartissent en surface de l'âme du fil. C'est la fracturation en plusieurs couches qui permet la redistribution et l'augmentation correspondante de surface de fil couverte par les blocs d'alliage de laiton en phase γ.

Mais cette fracturation produit des blocs dont les tailles sont aléatoires et présentent une distribution de tailles relativement large, c'est-à-dire avec des blocs dont les tailles sont très variables et peuvent comprendre toutes tailles entre des gros blocs et des petits blocs.

En pratique, certains blocs peuvent conserver leur épaisseur initiale sans être fracturés dans le sens de l'épaisseur, tandis que d'autres blocs peuvent être fracturés selon des profondeurs inégales, variant de façon aléatoire en fonction des zones de faiblesse éventuellement présentes dans la couche de laiton en phase γ avant tréfilage.

Selon l'invention, c'est l'état fracturé et redistribué de la couche superficielle de laiton en phase γ qui est la cause des ondulations résiduelles importantes en surface S de la pièce après finition d'électroérosion.

Pour atteindre les buts ci-dessus ainsi que d'autres, l'invention propose un fil électrode pour usinage par électroérosion, comprenant une âme en un premier alliage de cuivre et de zinc à teneur en zinc comprise entre 20 % et 45 % en poids, et comprenant un revêtement réalisé sur ladite âme, ledit revêtement comprenant un second alliage de cuivre et de zinc dont la teneur en zinc est supérieure à 50 % en poids et qui présente une structure morcelée en blocs entre lesquels l'âme est apparente ;
selon l'invention, dans le revêtement :
- les blocs de second alliage ont une épaisseur à distribution étroite, le rapport des épaisseurs des blocs les plus petits et des blocs les plus gros dans la majorité des blocs présents étant supérieur à 0,6,
- les blocs de second alliage assurent une couverture de l'âme selon un taux de couverture supérieur à 50 %.

L'obtention d'une distribution étroite des épaisseurs de blocs est plus facile à réaliser lorsque le revêtement du fil d'ébauche avant tréfilage présente une épaisseur inférieure ou égale à 7 µm environ. Il est donc avantageux de réaliser un fil d'électroérosion dans lequel l'épaisseur des blocs de second alliage est inférieure à 7 µm environ.

En pratique, pour un diamètre de fil de 0,250 mm, l'épaisseur des blocs pourra être en majorité comprise entre 4 µm et 5 µm environ.

De bons résultats seront obtenus en choisissant un premier alliage de l'âme consistant principalement en un alliage de cuivre et de zinc en phase α, ou en un mélange d'un alliage de cuivre et de zinc en phase α et d'un alliage de cuivre et de zinc en phase β'.

De même, le second alliage pourra consister principalement en un alliage de cuivre et de zinc en phase γ.

D'autres objets, caractéristiques et avantages de la présente invention ressortiront de la description suivante de modes de réalisation particuliers, faite en relation avec les figures jointes, parmi lesquelles :
- les figures 1 et 2 illustrent la présence d'ondulations sur une surface usinée par électroérosion ;
- la figure 3 est une vue schématique en coupe longitudinale d'un fil électrode selon un mode de réalisation de la présente invention ;
- la figure 4 est une vue schématique en coupe transversale à plus grande échelle du fil électrode de la figure 3 ;
- la figure 5 est une vue agrandie de la coupe transversale selon la figure 4 ;
- les figures 6 et 7 illustrent un procédé de fabrication du fil électrode selon la présente invention ;
- la figure 8 illustre schématiquement la surface externe d'un tronçon de fil électrode selon un mode de réalisation de l'invention ; et
- les figures 9 et 10 illustrent, par différence, le procédé de fabrication du fil d'art antérieur selon le document EP 1 009 574.

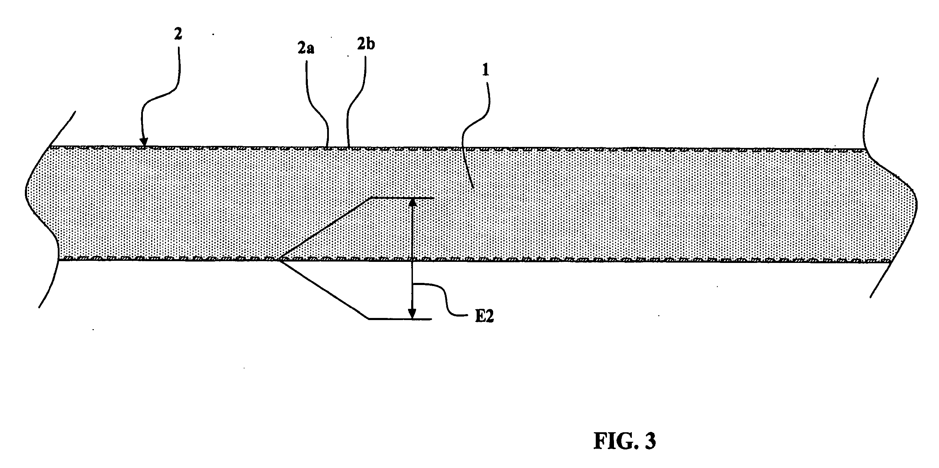

Considérons tout d'abord la structure du fil telle qu'illustrée sur les figures 3 à 5.

Dans ce mode de réalisation, le fil électrode selon l'invention est un fil généralement cylindrique ayant un diamètre d'environ 0,25 mm. Sur la coupe longitudinale diamétrale de la figure 3, on distingue l'âme 1 et le revêtement 2.

L'âme 1 est homogène, constituée d'un alliage de cuivre et de zinc à teneur en zinc comprise entre 20 % et 45 % en poids, constituant avantageusement un alliage en phase α (teneur en zinc inférieure à 37 % environ), ou un mélange d'alliage en phase β' et d'un alliage en phase α (teneur en zinc du mélange comprise entre 38 % et 45 %).

Le revêtement 2 est une structure hétérogène, constituée de blocs en un second alliage de cuivre et de zinc à teneur en zinc supérieure à 50 % en poids. Les blocs 2a sont séparés les uns des autres par des interstices 2b dans lesquels on peut distinguer l'âme 1.

Les blocs 2a de second alliage ont une épaisseur E2 ayant une distribution étroite, c'est-à-dire que les blocs 2a ont sensiblement tous des épaisseurs très voisines les unes des autres. De bons résultats de finition d'électroérosion sont obtenus lorsque le rapport des épaisseurs des blocs les plus petits et des blocs les plus gros dans la majorité des blocs 2a présents est supérieur à 0,6. En pratique, on pourra avantageusement réaliser des fils d'électroérosion dans lesquels plus de 80 % des blocs ont des épaisseurs E2 dans un rapport supérieur à 0,8 les unes par rapport aux autres.

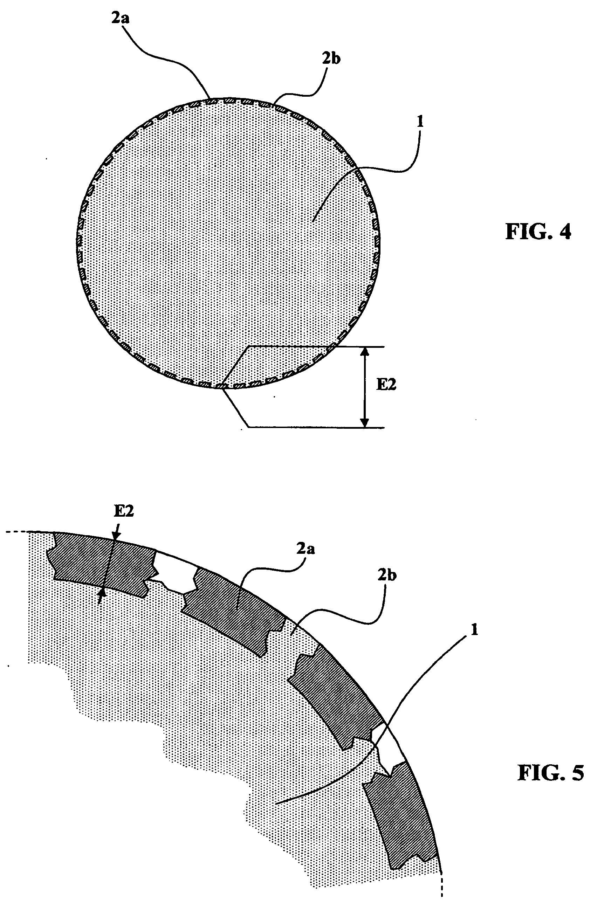

Sur les figures 4 et 5, on retrouve la même caractéristique, à savoir une épaisseur E2 relativement constante des blocs 2a, et des interstices 2b.

En outre, les blocs 2a de second alliage assurent une couverture de l'âme 1 selon un taux de couverture supérieur à 50 %. Cela signifie que plus de 50 % de la surface de l'âme 1 est recouverte par des blocs 2a.

En pratique, les blocs 2a ont en majorité une épaisseur E2 comprise entre 4 µm et 5 µm environ, pour un fil de 0,250 mm de diamètre.

Le second alliage constituant les blocs 2a consiste principalement en un alliage en phase γ, tandis que le premier alliage constituant l'âme 1 consiste principalement en un alliage en phase α, ou en un mélange d'un alliage en phase α et d'un alliage en phase β'.

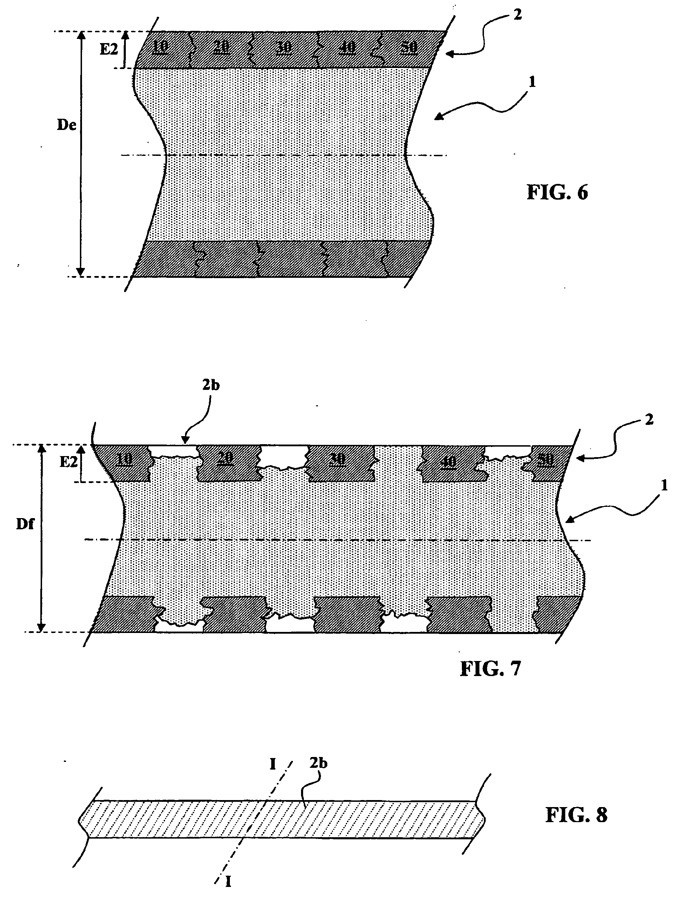

La structure de fil qui vient d'être décrite peut par exemple être obtenue par un procédé qui va maintenant être décrit en relation avec les figures 6 et 7.

Au cours d'une première étape a), on prévoit une âme 1 en alliage de cuivre et de zinc à teneur en zinc comprise entre 20 % et 45 % en poids. Le diamètre initial de l'âme est choisi supérieur au diamètre final du fil, ce qui est avantageux pour réduire le coût de production. A titre d'exemple, on peut partir d'une âme 1 ayant un diamètre de 0,5 mm, en alliage à 63 % de cuivre et 37 % de zinc.

A la seconde étape b), on revêt l'âme 1 avec une couche de zinc, par exemple ayant une épaisseur de 3 µm.

Au cours d'une troisième étape c), on chauffe l'âme ainsi revêtue, pour former une ébauche ayant un diamètre d'ébauche De et ayant une couche superficielle d'alliage de cuivre et de zinc en phase γ qui recouvre l'âme 1. Le diamètre De d'ébauche est choisi assez proche du diamètre final Df. L'épaisseur obtenue de la couche superficielle en phase γ est environ le double de l'épaisseur initiale de couche de zinc.

Au cours d'une étape suivante d), on refroidit l'ébauche à la température ambiante. On obtient une ébauche telle qu'illustrée sur la figure 6.

Au cours d'une dernière étape e), on tréfile à température ambiante l'ébauche pour l'amener au diamètre final Df désiré du fil, comme illustré sur la figure 7.

Pour obtenir la structure particulière de revêtement à blocs de tailles similaires assurant un bon recouvrement de l'âme, le rapport Df/De est relativement élevé, de préférence compris entre 0,4 et 0,8. Autrement dit, le tréfilage produit une réduction de diamètre relativement faible.

En outre, pendant l'étape c) d'échauffement de l'âme, on chauffe à une température comprise entre 177°C et 180°C environ pendant une durée comprise entre 5 et 7 heures environ.

De la sorte, on réalise simultanément une âme 1 ayant de bonnes propriétés mécaniques.

Selon une possibilité, l'étape b) de dépôt de zinc peut être réalisée par dépôt électrolytique.

On peut aussi, selon l'invention, réaliser l'ébauche à partir d'un fil d'âme plus gros, par exemple ayant un diamètre de 1 mm, que l'on recouvre d'une couche de zinc de 6 µm et que l'on tréfile avant diffusion jusqu'au diamètre d'ébauche De de 0,5 mm. On retrouve alors la même structure d'ébauche à couche de zinc de 3 µm environ.

Considérons à nouveau les figures 6 et 7.

La figure 6 illustre une coupe longitudinale d'une ébauche de fil selon l'invention avant l'étape de tréfilage : le revêtement a une épaisseur initiale E2, et on a illustré les zones de revêtement 10, 20, 30, 40 et 50 qui vont être ensuite séparées par fracturation lors du tréfilage. Le diamètre initial du fil est De.

Après tréfilage, sur la figure 7, on a illustré le fil électrode étiré par le tréfilage, ayant pris un diamètre Df plus petit que De. On retrouve des blocs 10, 20, 30, 40 et 50, qui ont été écartés les uns des autres selon les interstices 2b tout en restant à la surface du fil et tout en conservant une épaisseur E2 constante.

En pratique, la couche de blocs 10-50 présente dans l'ébauche de fil avant tréfilage (figure 6) est morcelée en une seule couche par le tréfilage et produit en fin de tréfilage (figure 7) une structure à une couche de blocs disjoints 10-50 d'épaisseur relativement constante et égale à l'épaisseur E2 initiale du revêtement. L'épaisseur relativement constante des blocs 10-50 résulte du fait que les blocs n'ont pas été fracturés dans le sens de leur épaisseur, et qu'ils n'ont donc pas été redistribués.

On constate que le procédé permettant de réaliser une telle fracturation sans distribution produit le plus souvent un fil dont la surface externe est reconnaissable par la présence d'orientations préférentielles des fractures 2b. Cela est illustré sur la figure 8 : les fractures 2b de l'alliage de laiton en phase γ paraissent alignées selon des rangées obliques parallèles à la direction I-I, constituant des orientations préférentielles.

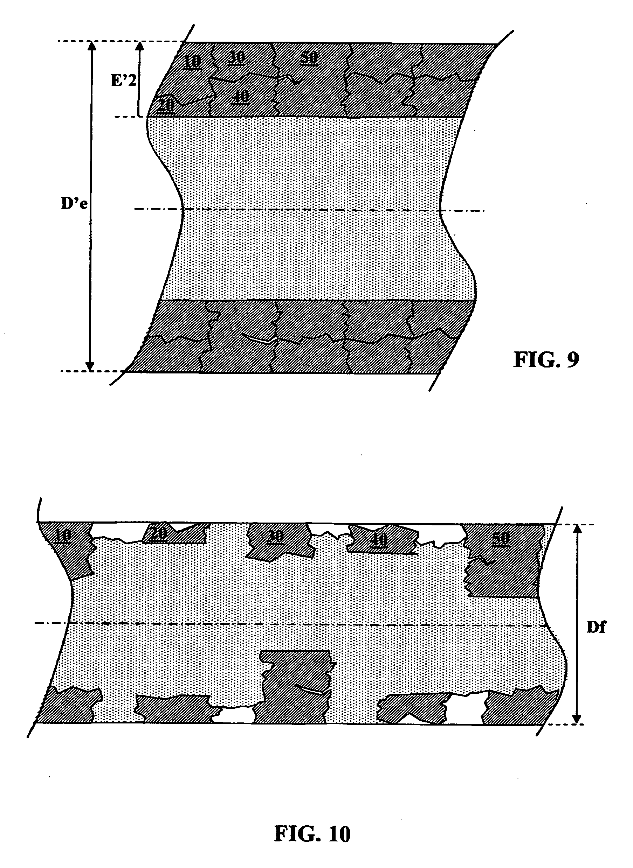

On considère maintenant les figures 9 et 10 qui illustrent un procédé de l'art antérieur tel que celui du document EP 1 009 574. Dans ce cas, on va réaliser un tréfilage qui part d'un diamètre D'e plus grand que le diamètre De pour arriver au même diamètre final Df. Le revêtement, avant tréfilage (figure 9), présente une épaisseur E'2 plus grande que l'épaisseur E2, et l'on distingue les zones 10-50. Lors du tréfilage, du fait de la plus grande épaisseur E'2 et du plus petit rapport Df/D'e, le revêtement va à la fois se morceler latéralement et se morceler en profondeur selon au moins deux couches pour réaliser la séparation des blocs 10-50 les uns par rapport aux autres. Le revêtement va ainsi être redistribué en présentant une épaisseur irrégulière, comme illustré sur la figure 10. On notera que la figure schématique 10 illustre une distribution relativement large dans l'épaisseur des blocs 10-50, avec des blocs très gros 50, qui n'ont pas été fracturés en profondeur, avec des blocs plus petits 20 ou 40, et avec des blocs de taille moyenne 10 ou 30. Des blocs petits tels que les blocs 20 ou 40 sont susceptibles de constituer une poudre. L'invention permet d'éviter cela.

En pratique, une couche de laiton en phase γ redistribuée est constituée de trois types de blocs :
- des blocs restés attachés à l'âme dans leur position d'origine, et non fissurés (par exemple le bloc 50),
- des blocs en cours de fissuration,
- des fragments de blocs séparés les uns des autres puis déplacés et recollés à la surface de l'âme lors du tréfilage, assurant un taux de recouvrement de l'âme plus élevé.

Les tailles irrégulières des blocs issus d'une redistribution, ainsi que la fissuration des blocs et leur replaquage à la surface de l'âme, pendant l'opération de tréfilage, sont susceptibles de provoquer des problèmes de conduction électrique.

La conduction électrique est nécessaire à l'amenée du courant du générateur de la machine d'électroérosion vers le fil, au travers de sa surface extérieure.

Il est probable que ces irrégularités de structure et d'épaisseur de couche superficielle de fil redistribuée rendent l'étincelage instable, et provoquent sur la surface S (figures 1 et 2) des pics et des vallées dans le sens d'avance F2 du fil F. C'est vraisemblablement la raison pour laquelle, dans le cas d'utilisation d'un fil à couche superficielle redistribuée, le paramètre d'ondulation Wt mesuré sur la pièce usinée finie reste supérieur à 0,5 µm.

On a mis en évidence l'effet obtenu par la présente invention en effectuant des mesures du paramètre d'ondulation Wt notamment sur deux pièces respectives usinées à l'aide de deux fils échantillons :
- échantillon 1 : un fil électrode selon le document EP 1 009 574, de diamètre égal à 0,25 mm, à âme en laiton en phase α, et dont la couche superficielle comprend des blocs de laiton en phase γ fissurés et redistribués, présentant des épaisseurs mesurées comprises entre 2,3 µm et 5,1 µm ;
- échantillon 2 : un fil électrode selon la présente invention, de diamètre égal à 0,25 mm, avec une âme en laiton en phase α, avec une couche superficielle constituée de blocs de laiton en phase γ fracturés et non redistribués, dans laquelle plus de 80 % des blocs ont une épaisseur comprise entre 4 µm et 4,3 µm.

A l'aide de l'un et l'autre des fils échantillons, on a usiné une pièce d'acier à outil Z160DCV12 respective de 50 mm de haut, et on a procédé à six étapes de finition, à l'aide d'une machine AGIE Agiecut Evolution II SFF (marque d'usage) (année 2001).

On a ensuite mesuré le paramètre d'ondulation Wt de la surface finie des pièces obtenue par l'un et l'autre des fils échantillons, à l'aide d'un appareil MAHR Perthometer S2 (marque d'usage) (fabriqué en 2006), avec une unité d'avance MAHR PZK (marque d'usage), un palpeur MAHR MFW250 (marque d'usage) de 90° d'angle et de 2 µm de rayon.

Les paramètres de mesure étaient :
- longueur d'évaluation : 0,8 mm
- longueur de coupure (filtre) : 0,8 mm
- nombre de longueurs : 5 longueurs d'évaluation, plus une avant et une après, soit 5,6 mm de parcours total.

Le résultat de la mesure a été :
- avec l'échantillon 1 : Wt = 0,9 µm
- avec l'échantillon 2 : Wt = 0,39 µm.

On obtient donc une amélioration très sensible du paramètre d'ondulation Wt sur les pièces à l'issue des étapes de finition réalisées à l'aide d'un fil d'électroérosion selon l'invention.

La présente invention n'est pas limitée aux modes de réalisation qui ont été explicitement décrits, mais elle en inclut les diverses variantes et généralisations contenues dans le domaine des revendications ci-après.

## Revendications

1. Fil électrode pour usinage par électroérosion, comprenant une âme (1) en un premier alliage de cuivre et de zinc à teneur en zinc comprise entre 20 % et 45% en poids, et comprenant un revêtement (2) réalisé sur ladite âme (1), ledit revêtement (2) comprenant un second alliage de cuivre et de zinc dont la teneur en zinc est supérieure à 50 % en poids et qui présente une structure morcelée en blocs (2a) entre lesquels l'âme (1) est apparente, **caractérisé en ce que**, dans le revêtement (2) :
- les blocs (2a) de second alliage ont une épaisseur (E2) à distribution étroite, le rapport des épaisseurs des petits blocs et des gros blocs de la majorité des blocs (2a) présents étant supérieur à 0,6,
- les blocs (2a) de second alliage assurent une couverture de l'âme (1) selon un taux de couverture supérieur à 50 %.

2. Fil électrode selon la revendication 1, **caractérisé en ce que** l'épaisseur (E2) des blocs (2a) de second alliage est inférieure à 7 µm environ.

3. Fil électrode selon l'une des revendications 1 ou 2, **caractérisé en ce que**, pour un diamètre de fil de 0,250 mm environ, l'épaisseur (E2) des blocs (2a) est en majorité comprise entre 4 µm et 5 µm environ.

4. Fil électrode selon l'une quelconque des revendications 1 à 3, **caractérisé en ce que** le premier alliage de l'âme (1) consiste principalement en un alliage de cuivre et de zinc en phase α ou en un mélange d'un alliage de cuivre et de zinc en phase a et d'un alliage de cuivre et de zinc en phase β'.

5. Fil électrode selon l'une quelconque des revendications 1 à 4, **caractérisé en ce que** le second alliage consiste principalement en un alliage de cuivre et de zinc en phase γ.

6. Fil électrode selon l'une quelconque des revendications 1 à 5, **caractérisé en ce que**, en surface du fil, les fractures (2b) de l'alliage de cuivre et de zinc en phase γ présentent des orientations préférentielles (I-I).

## Claims

1. Electrode wire for spark erosion machining, comprising a core (1) in a first alloy of copper and zinc with a zinc content between 20% and 45% by weight, and comprising a coating (2) produced on said core (1), said coating (2) comprising a second alloy of copper and zinc wherein the zinc content is greater than 50% by weight and that has a structure fragmented into blocks (2a) between which the core (1) is exposed, **characterised in that**, in the coating (2) :
- the second alloy blocks (2a) have a thickness (E2) with a narrow distribution, the ratio of the thicknesses of the small blocks and the large blocks of the majority of the blocks (2a) present being greater than 0.6,
- the second alloy blocks (2a) provide a coverage of the core (1) according to a coverage rate greater than 50%.

2. Electrode wire according to claim 1, **characterised in that** the thickness (E2) of the second alloy blocks (2a) is less than approximately 7 µm.

3. Electrode wire according to claims 1 or 2, **characterised in that**, for a wire diameter of approximately 0.250 mm, the thickness (E2) of the blocks (2a) is for the most part between 4 µm and 5 µm approximately.

4. Electrode wire according to any one of claims 1 to 3, **characterised in that** the first alloy of the core (1) consists primarily of an α phase alloy of copper and zinc or a mixture of an α phase alloy of copper and zinc and a β' phase alloy of copper and zinc.

5. Electrode wire according to any one of claims 1 to 4, **characterised in that** the second alloy consists primarily of a γ phase alloy of copper and zinc.

6. Electrode wire according to any one of claims 1 to 5, **characterised in that**, at the surface of the wire, the fractures (2b) of the γ phase alloy of copper and zinc have preferred orientations (I-I).

## Patentansprüche

1. Drahtelektrode zur Bearbeitung mittels Elektroerosion, mit einer Seele (1) aus einer ersten Legierung von Kupfer und Zink, mit einem Gehalt an Zink, der zwischen 20 Gewichts% und 45 Gewichts% liegt,
und mit einer Beschichtung (2), die auf der genannten Seele (1) realisiert ist, wobei die genannte Beschichtung (2) eine zweite Legierung aus Kupfer und Zink enthält, deren Gehalt an Zink größer ist als 50 Gewichts% und die eine in Blöcke (2a) zerstückelte Struktur aufweist, zwischen denen die Seele (1) sichtbar ist, **dadurch gekennzeichnet,**
**daß** in der Beschichtung (2):
- die Blöcke (2a) der zweiten Legierung eine Dicke (E2) mit einer begrenzten Verteilung haben, wobei das Verhältnis der Dicken von kleinen Blöcken und von großen Blöcken der Mehrheit von anwesenden Blöcken (2a) größer ist als 0,6,
- die Blöcke (2a) der zweiten Legierung eine Bedeckung der Seele (1) mit einer Bedeckungsrate von größer als 50 % sicherstellen.

2. Drahtelektrode nach Anspruch 1, **dadurch gekennzeichnet,**
**daß** die Dicke (E2) der Blöcke (2a) der zweiten Legierung kleiner ist als ungefähr 7 µm.

3. Drahtelektrode nach einem der Ansprüche 1 oder 2, **dadurch gekennzeichnet,**
**daß** bei einem Durchmesser des Drahtes von ungefähr 0,250 mm die Dicke (E2) der Blöcke (2a) in ihrer Mehrheit zwischen ungefähr 4 µm und ungefähr 5 µm liegt.

4. Drahtelektrode nach irgendeinem der Ansprüche 1 bis 3, **dadurch gekennzeichnet,**
**daß** die erste Legierung der Seele (1) hauptsächlich aus einer Legierung von Kupfer und Zink in Phase α oder aus einer Mischung einer Legierung von Kupfer und Zink in Phase α und einer Legierung aus Kupfer und Zink in Phase β' besteht.

5. Drahtelektrode nach irgendeinem der Ansprüche 1 bis 4, **dadurch gekennzeichnet,**
**daß** die zweite Legierung hauptsächlich aus einer Legierung von Kupfer und Zink in Phase γ besteht.

6. Drahtelektrode nach irgendeinem der Ansprüche 1 bis 5, **dadurch gekennzeichnet,**
**daß** auf der Oberfläche des Drahtes die Bruchteile (2b) der Legierung aus Kupfer und Zink in Phase γ bevorzugte Ausrichtungen (I-I) aufweisen.
